# EUROPEAN PATENT APPLICATION

(11) **EP 4 428 634 A1**
(43) Date of publication of application: **11.09.2024**
(21) Application number: 23161052.8
(22) Date of filing: 09.03.2023
(51) Int. Cl.: G05B 9/03, B60K 35/00, B60K 37/06, B60R 16/03

(54) **VEHICLE COMPONENT CONTROL SYSTEM**

(71) Applicant: Hyva Holding BV, 2408 AK Alphen aan den Rijn (NL)
(72) Inventor: KESSEL, Christian, 2400 AH Alphen aan de Rijn (NL); MIRCHEV, Milen, 2400 AH Alphen aan de Rijn (NL); BRANDHORST, Niels, 2400 AH Alphen aan de Rijn (NL); KRISHNAA, Nikhil Murali, 2408 AK Alphen aan de Rijn (NL)
(74) Representative: Haseltine Lake Kempner LLP

(57) **Abstract**

There is disclosed a component control system for a vehicle comprising a first controller configured to receive a first input and output a control instruction to control a component of the vehicle based on the first input. The component control system further comprises a second controller configured to receive a second input, determine, based on the second input, whether to permit operation the component and when the second controller determines operation of the component is permitted, enable the control instruction from the first controller to control the component.

## Description

### Technical Field

The present invention relates to a component control system, a method of controlling a vehicle and a machine readable medium.

### Background

Control systems for components, such as components of vehicles, which are safety critical may comprise safety controllers. A safety controller may comprise more than one microcontroller and may be certified according to a suitable safety standard (e.g. ISO 13849-1 category 2).

### Summary

According to a first aspect, there is provided a component control system for a vehicle comprising: a first controller configured to receive a first input and output a control instruction to control a component of the vehicle based on the first input; and a second controller configured to receive a second input, determine, based on the second input, whether to permit operation the component and when the second controller determines operation of the component is permitted, enable the control instruction from the first controller to control the component.

In some examples the first input comprises at least one of: a user input and a signal from a control unit of the vehicle.

In some examples the second input comprises at least one of a measured parameter and a signal from the first controller.

In some examples the component is a hydraulic component, a pneumatic component or an electromagnetic component.

In some examples the first controller and second controller communicate via a bus.

In some examples the first controller is a controller of a human machine interface of the vehicle or a controller of a display system of the vehicle.

In some examples the second controller is gateway device.

In some examples the component control system further comprises a switching device, wherein enabling the control instruction from the first controller to control the component comprises controlling the switching device, by the second controller, to enable the component to receive the control instruction from the first controller.

In some examples the switching device is a relay or a semiconductor switching device.

In some examples the vehicle is a tipper.

In some examples a vehicle comprises the component control system.

In some examples the vehicle comprises a first part and a second part, wherein the first and second parts are physically detachable, and wherein the first controller is located within the first part and/or the second controller is located within the second part.

According to a second aspect, there is provided a method of controlling a component of a vehicle comprising receiving, by a first controller, a first input from a user; receiving, by a second controller, a second input based on a measured parameter; outputting, from the first controller, a control instruction to control the component based on the first input; determining, by the second controller, whether to permit operation of the component based on the second input; and when the second controller determines operation of the component is permitted, allowing the control instruction to control the component.

According to a third aspect, there is provided a machine-readable medium comprising machine-readable instructions which, when executed by a processor, cause the processor to: receive an input comprising a measured parameter; determine whether to permit operation of a component of a vehicle based on the received input; and when determined to permit operation of the component, permit instructions issued by a first controller to control the component.

In some examples the instructions to permit instructions issued by the first controller to control the component comprise instructions to activate a switching device to enable the first controller to control the component.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described, by way of example only, with reference to the accompanying Figures, in which:
**Figure 1** is a simplified schematic representation of an example component control system;
**Figure 2** is a schematic representation of a vehicle comprising a component control system;
**Figure 3** is a simplified schematic representation of another example component control system;
**Figure 4** is a flowchart of an example method of controlling a component of a vehicle;
**Figure 5** is a flowchart of another example method of controlling a component of a vehicle; and
**Figure 6** and **Figure 7** are examples of a machine-readable medium associated with a processor.

### Detailed Description

Embodiments of the present disclosure relate to a component control system for a vehicle, method of controlling a component of a vehicle and a machine-readable medium comprising machine-readable instructions.

A vehicle may comprise components which are controlled by one or more controllers. For example heavy construction vehicles or other heavy vehicles may comprise pneumatically, hydraulically or electrically operated components. It may be important to operate such components in a safe manner to ensure the safety of their operators, other individuals and to avoid damage to property or to the vehicle itself. For example the control systems of the vehicle, or components thereof may receive various inputs, for example control instructions based on input from an operator, such as via a steering wheel, joystick, lever, buttons, touch screen or the like, instructing the vehicle or an associated component to perform a particular action. The control system may also receive information from other sources, such as from sensors, which may monitor parameters relating to the vehicle, components associated with the vehicle or the vehicles surrounding environment.

Safety controllers may be used to ensure the safe operation of components of a vehicle. Such controllers may receive inputs from a user, sensors and other sources and output instructions to control a component of the vehicle based on the inputs. The instructions may instruct a component to operate only if the control system determines that it is safe to operate such a component. However, safety controllers may be expensive and incorporating such controllers may add additional complexity to the systems of the vehicle.

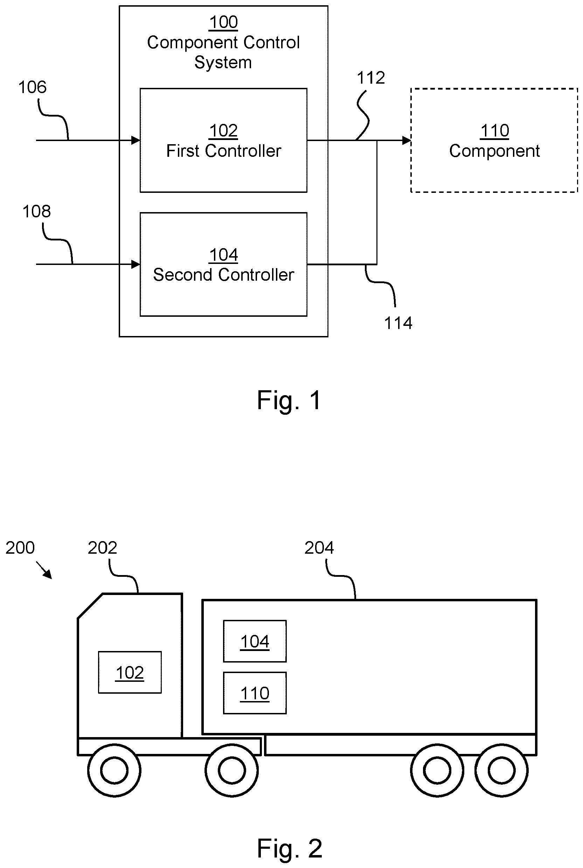

**Figure 1** shows a component control system 100 for a vehicle comprising a first controller 102 and a second controller 104. The first and second controllers 102, 104 may take the place of a safety controller, in that they are used to safely control a component 110 of the vehicle. The first controller 102 may be referred to as a "logic controller" and the second controller 104 may be referred to as a "safety interlock controller". The first and second controllers 102, 104 may have a further purpose within the vehicle. In other words, controllers which are present in the vehicle for another purpose may be used to perform the functions of the first and second controllers 102, 104 thereby avoiding the additional cost and complexity of installing additional safety controller(s) in the vehicle.

The first controller 102 is configured to receive a first input 106 and output a control instruction 112 to control a component 110 of the vehicle based on the first input 106. The first input 106 may comprise a signal, such as an electrical signal, for example a digital or analog signal, or any other suitable signal such as an optical signal or a wireless signal (e.g. Wi-Fi, Bluetooth). The signals may be generated in response to an action by an operator of the vehicle, for example they may operate an input device such as a joystick, button, steering wheel, lever, keyboard, touchscreen or any other suitable input device, which may generate the signal of the first input 106. The first controller 102 may process data contained within the first input 106. For example the data may be processed to generate the control instruction 112. The control instruction 112 may also be an electrical signal, for example an analog or digital signal or it may be any other suitable signal such as an optical signal or a wireless signal. The processing may comprise converting the signal of the first input 106, which may be a simple signal in that a parameter of the signal correlates with an intended input value (e.g. a voltage may indicate a position of an input device such as a joystick or the signal may be a binary signal indicating discrete inputs such as forward and reverse), to the control instruction 112 which is suitable for instructing the component 110 to operate as intended by the operator. In other examples the signal may be more complex or abstract (e.g. a digital signal, a multiplexed signal).

In some examples the first controller 102 may receive more than one input. For example it may receive more than one of the signals described above. Processing the first input 106 may comprise determining an output control instruction 112 based on the more than one input signal. For example, an operator may intend to operate a hydraulic component which requires more than one input, for example a joystick may be used by the operator to indicate the desired position of a hydraulic cylinder and a rotary switch may be used to indicate the rate at which the hydraulic cylinder extends or retracts. Therefore, the first controller 102 may utilise multiple inputs to determine control instructions 112 for a single component such as the hydraulic cylinder.

In some examples the first controller 102 may receive more than one input, wherein the more than one input may relate to the operation of more than component of the vehicle. For example one of the inputs may relate to control of the vehicle (e.g. steering, braking, acceleration), one of the inputs may relate to control of a hydraulic component, one of the inputs may relate to control of a pneumatic component, one of the inputs may relate to control of an electrical component and so on. In some examples multiple inputs may relate to control of a single component or a single input may relate to control of multiple components.

The second controller 104 is configured to receive a second input 108. The second input 108 may comprise a signal, for example an electrical signal, e.g. an analog or digital signal, or any other suitable signal such as an optical or wireless signal. The signal of the second input 108 may be indicative of the state of the vehicle, a state of component of the vehicle or the environment around the vehicle. For example, signals indicative of the state of the vehicle may include signals indicating a position of the vehicle, an operational mode of the vehicle (e.g. parked, engine running, service due, etc.), presence of a fault, trailer connected or disconnected, or the like. Signals indicative of a state of a component of the vehicle may indicate a temperature of a component, a position of a component (e.g. a hydraulic cylinder in an extended, retracted or intermediate position), a pressure (e.g. hydraulic or pneumatic pressure), battery charge level or voltage, activated or deactivated, presence of a fault or the like. Signals indicative of the environment may comprise temperature measurements of the environment, proximity measurements indicating presence of nearby objects, measurements from inclination sensors indicating the vehicle is on a slope, or the like. The second input 108 signals may be generated by a sensor, such as a switch (e.g. limit switch, rotary switch, toggle switch, etc.), inclination sensor, potentiometer, magnetic sensor (e.g. hall effect sensor, reed switch), GPS, thermometer (e.g. thermocouple), flow rate sensor, pressure sensor, proximity sensor or any other suitable sensor.

The second controller 104 may receive more than one input. For example multiple sensors may provide input signals to the second controller 104 relating to measurements indicative of the state of the vehicle, a state of component of the vehicle or the environment around the vehicle.

The second controller 104 is further configured to determine, based on the second input 108, whether to permit operation the component 110. The second controller 104 may process second input 108 and make a determination whether it is safe to permit the component 110 to operation. For example the second controller 104 may determine if parameters defined in the second input 108 are within allowed ranges or above or below predefined threshold values.

In particular, the second processor may determine whether to permit the component 110 to operate according to the control instruction 112 output by the first controller 102. For example, when the first input 106 comprises a signal indicating the operator intends to operate a hydraulic component and the second input 108 comprises a measurement from an inclination sensor indicating the vehicle is on a slope, the second controller 104 may determine that it is unsafe to operate the hydraulic component as intended by the operator as this may cause the vehicle to become unstable. Similarly the second controller 104 may determine operation of a component 110 is not permitted if it would cause over extension of a component, a temperature of a component to exceed a threshold, a speed to exceed a threshold, a force on a component to exceed a threshold, or the like. In other examples, the second controller 104 may determine that operation of the component may pose a risk to an entity external to the vehicle, for example a proximity sensor may indicate the presence of an object or person obstructing the intended motion of the vehicle or motion of a component of the vehicle. The second controller 104 may then determine not to permit operation of the component 110 based on this determination.

When the second controller 104 determines operation of the component 110 is permitted, the second controller 104 enables the control instruction 112 from the first controller 102 to control the component 110. The second controller 104 may output a signal 114 indicating operation of the component 110 is permitted. In other words, in response to the second controller 104 determining the component may be operated (e.g. determining it is safe to operate) according to the control instruction 112 issued by the first controller 102, the second controller 104 may output a signal 114 which allows the component 110 to operate.

In some examples the component may receive the signal 114 output by the second controller 104 and the control instruction 112 from the first controller, and based on the signal 114 output by the second controller 104, the component 110 may determine whether to operate according to the control instruction 112. For example, when the signal 114 indicates the component 110 is not permitted to operate the component may determine not to operate according to the control instruction 112 and when the signal 114 indicates the component 110 is permitted to operate the component may determine to operate according to the control instruction 112. In some examples the signal may cause the component 110 to change state i.e. to change from an activated state to a deactivated state or from a deactivated state to a state.

In some examples the signal 114 output by the second controller 104 may enable or disable the control instructions 112 from reaching the component 110 thereby allowing or preventing the component 110 to operate according to the control instructions. In other examples the signal 114 output by the second controller may enable or disable the first input 106 from reaching the first controller 102, thereby preventing the first controller from outputting the control instructions 112 based on the first input 106.

In this way the first and second controllers 102, 104 may allow safe operation of the component 110 of the vehicle without the use of a dedicated safety controller. In particular two non-safety certified controllers may be used to achieve the same safety level (e.g. ISO 13849-1 category 2) as a safety certified programmable logic controller (PLC). In other words, the functionality that would otherwise be performed by a safety controller may be distributed between the first and second controllers 102, 104, wherein the first and second controllers 102, 104 may be pre-existing controllers in a vehicle.

**Figure 2** shows an example of a vehicle 200 comprising the component control system 100 described in relation to Figure 1. The vehicle 200 comprises a first part 202 and a second part 204. In some examples the vehicle 200 may be a tipper. A tipper is a vehicle used for transporting bulk materials, such as gravel or soil, and may comprise a box-shaped cargo container which may have an open top. The cargo container may be hinged proximal to the back end of the tipper and the component 110 may be a hydraulic component such as a hydraulic valve and/or cylinder provided proximal to the front end of the cargo container and arranged to raise and lower the front end of the tipper to discharge (i.e. tip) the contents of the cargo container.

Using the first and second controllers 102, 104 rather than a single safety controller, may facilitate physical disconnection between the first and second parts 202, 204 of the vehicle 200 as one controller may be provided on one part and the other controller proved on the other part. In contrast, if a single safety controller is used, then when disconnected, one part of the vehicle would not comprise a controller. In other words the first and second controllers 102, 104 may be located remotely from each other.

In examples wherein the vehicle 200 is a tipper the first part 202 may be a truck and the second part 204 may be a trailer. As used herein, a "truck" is a part of a vehicle which comprises a cab. The cab may comprise a compartment for an operator of the vehicle 200 and may comprise input devices for the operator to input their intended vehicle controls. As described previously the input devices may comprise a steering wheel, joystick, lever, buttons, touch screen or the like.

In some examples the truck may also comprise systems which control and provide motion of the vehicle e.g. steering, engine, motors. The truck may also comprise features for connecting the truck to other parts of the vehicle, such as a fifth-wheel coupling or a tow bar. In some examples the first and second parts 202, 204 of the vehicle 200 (e.g. the truck and a trailer) may be physically detachable.

As used herein, a "trailer" is a part of a vehicle which may be attached to the truck. The trailer may be towed behind the truck and coupled to the truck via a coupling such as a fifth-wheel coupling or a tow bar. The trailer may be passive i.e. provides no driving force or it may be powered and comprise a means of propulsion (e.g. engine or motor). The trailer may also comprise other means of controlling motion such as brakes or steering means. Control of these means may be provided from the truck and may be based on input from an operator in the truck.

In this example the first controller 102 of the component control system 100 is located within the first part 202 and the second controller 104 is located within the second part 204. In other examples the first and second controllers 102, 104 may be both arranged in a single part of the vehicle 200 i.e. both in the first part 202 or both in the second part 204.

In this example the component 110 is located in the second part 204 of the vehicle 200, however in other examples the component may be located in the first part 202 of the vehicle. In some examples the vehicle 200 may comprise more than one component, for example the first part 202 may comprise one or more components and/or the second part 204 may comprise one or more components.

In some examples the component 110 may be a used when driving the vehicle (e.g. engine, brakes, steering components) or it may be a component used when the vehicle is parked (e.g. stabilising legs, parking brakes). In some examples, the component 110 is a hydraulic component, a pneumatic component or an electromagnetic component. For example the component may be a hydraulic valve or cylinder, for example associated with a cargo container of a tipper (e.g. used to raise and/or lower the cargo container). An example of an electromagnetic component is a stepper motor.

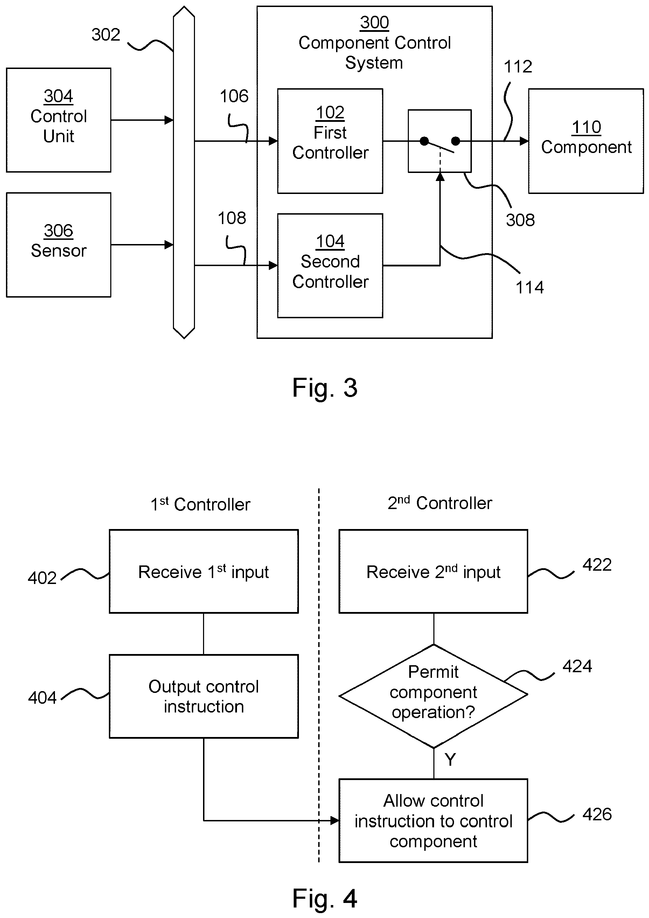

**Figure 3** shows an example of a component control system 300 which may be a component control system 100 as described in relation to Figure 1. Figure 3 also shows other components of a vehicle, such as the vehicle 200 described in relation to Figure 2.

In this example the first controller 102 and second controller 104 communicate via a bus 302. In some examples the bus 302 may be Controller Area Network (CAN) bus of the vehicle. In other examples the controllers 102, 104 and other devices described in Figure 3 may communicate by any other suitable means, for example using a different type of bus, wireless communication (e.g. Wi-Fi, Bluetooth, etc.), via optical fibers, or the like.

The first controller 102 may perform further functions, for example the first controller 102 may be a controller of a human machine interface (HMI) of the vehicle or a controller of a display system of the vehicle. A HMI may comprise a user interface that allows an operator to interact with systems of the vehicle. For example it may comprise physical controls such as a steering wheel, joystick, buttons, levers or the like or it may comprise a virtual interface, for example displayed on a screen, such as a touch screen. The display system may display such an interface, or it may display other information relating to the status and/or operation of the vehicle to an operator. Similarly, in some examples the second controller 104 may perform other functions, for example the second controller 104 may be gateway device. A gateway device may provide connectivity for systems of the vehicle, for example it may provide connectivity to cellular networks (e.g. 4G, 5G networks) or may provide local area network access (e.g. Wi-Fi) or may provide access to global navigation satellite systems (e.g. GPS). As described herein, the gateway device may also perform safety interlocks, sensor interfacing, sensor calibrations and/or diagnosis and provide connectivity to the bus of the vehicle. A gateway may also act as an interface between different electrical systems of the vehicle.

In this example the first input 106 comprises at least one of: a user input and a signal from a control unit 304 of the vehicle. As described previously, the user input may be input via a joystick, a steering wheel, a button, a lever, a keyboard, a touchscreen or the like. The control unit 304 may control functions of a vehicle and may communicate with the bus 302. The control unit may be a Vehicle Control Unit (VCU), a Stability Control Unit (SCU) or Body-function Control Unit (BCU) or Electronic Control Unit (ECU). In some examples the vehicle may be capable of operating at least partially autonomously, i.e. controlling operations of the vehicle without an operator input. In such examples, a control unit, such as the VCU of the vehicle, may provide a signal indicating intended operations of a component as a first input 106.

In this example the second input 108 comprises at least one of a measured parameter and a signal from the first controller 102. As described previously, the vehicle may comprise a sensor 306, such as a switch (e.g. limit switch), inclination sensor, potentiometer, magnetic sensor (e.g. hall effect sensor, reed switch), GPS, thermometer (e.g. thermocouple), flow rate sensor, pressure sensor, proximity sensor or any other suitable sensor. In some examples the vehicle may comprise more than one of these sensors. Each sensor may be connected to and provide data over the bus 302.

In this example the component control system 300 further comprises a switching device 308. Enabling the control instruction from the first controller to control the component may comprise controlling the switching device 308, by the second controller 104, to enable the component 110 to receive the control instruction 112 from the first controller 102. Enabling the component 110 to receive the control instruction 112 may comprise activating the component 110, for example by providing power to the component or otherwise enabling the component 110 to function. In other examples enabling the component 110 to receive the control instruction may comprise allowing the control instruction 112 to be transmitted from the first controller 102 to the component 110. For example enabling the component 110 to receive the control instruction 112 may comprise connecting a switch or other interface allowing the control instruction 112 to be transmitted to the component 110. For example, the control instruction may be transmitted along an electrical cable or cable(s) and enabling the component 110 to receive the control instruction 112 may comprise completing an electrical circuit, for example by closing a switch, thereby enabling the control instruction 112 to reach the component 110. In other examples the switch may be provided at the input to the first controller 102 such that enabling and disabling the component 110 to receive the control instruction 112 allows or prevents the first controller 102 from receiving the first input 106 and which will result in the first controller 102 outputting or not outputting the control instruction 112 depending on whether the first input 106 was received at the first controller 102.

In the example shown in Figure 3, the component control system 300 comprises a switching device 308 which is actuated by an output signal 114 of the second controller 104 indicating operation of the component 110 is permitted or not permitted. In this example the switching device is provided between the first controller 102 and the component 110 such that when the switching device is closed, it allows the control instruction 112 to reach the component 110 and when the switching device 308 is open it prevents the control instruction from reaching the component 110.

In other examples the switching device 308 may be provided at other locations, for example to enable or prevent the first input 106 at the first controller 102. In other examples the switching device 308 may enable or disable the component 110 by other means, for example the switching device 308 may switch (i.e. connect and/or disconnect) a power supply of the component 110.

Although the first and second controllers 102, 104 and the switching device 308 of the component control system 300 are depicted together in Figure 3, in practice these components may be distributed in different locations of the vehicle, for example in different parts of the vehicle as described in relation to Figure 2.

In this example a single component 110 is depicted, however in other examples the vehicle may comprise multiple components, and in such examples the component control system 300 may comprise multiple switching devices. In some examples each component may be associated with a switching device, whereas in other examples a single switching device may enable or disable multiple components. For example a single switching device may enable or disable a group of related components, for example components of a particular type (e.g. multiple hydraulic components) or a group of components which perform a particular function (e.g. components which raise and lower a cargo container of a tipper).

In other examples, the component control system 300 may not comprise a switching device 308, and instead the component 110 may receive the signal 114 output by the second controller 104 and the component 110 may determine whether to operate or not to operate according to the control instruction 112 based on the signal 114.

In this example the component 110 is depicted as receiving the control instruction 112 from the first controller 102 via the switching device, however, in other examples the component 110 may be connected to the bus 302 and the component 110 may receive the control instruction 112 via the bus 302.

In some examples the switching device 308 is a physical switching device, such a relay. In some examples the switching device 308 is a semiconductor switching device, such as a transistor (e.g. a MOSFET or IGBT).

In a particular example, an operator may intend to raise a cargo container of a tipper. The operator may move a joystick which provides an input to a HMI of the vehicle. The HMI may act as a display to the operator and may also contain the first controller 102 which provides the logic for generating a control instruction for activating a stepper motor (i.e. component 110) to raise the cargo container. A gateway device of the vehicle may contain the second controller 104, which may receive inputs from various sensors, such as an inclination sensor and a pressure sensor. If the second controller 104 determines it is safe to raise the cargo container, then it may output a signal 114 to activate a safety relay which in turn powers the stepper motor. The stepper motor may then recognise commands output from the HMI based on the joystick position controlled by the operator. Therefore the operation of the cargo container of the tipper may be controlled safely.

**Figure 4** is a flow chart of a method of controlling a component of a vehicle. The vehicle may be a vehicle as described in relation to Figure 2 and the method may be performed by a component control system 100, 300 as described in relation to Figures 1 and/or 3. In some examples the vehicle may be a tipper, or another type of heavy vehicle, such a heavy construction vehicle, a tractor, a bulldozer, a forklift or the like.

In this example blocks 402 and 404 are executed by a first controller, such as the first controller 102 described in relation to Figures 1, 2 and 3. Furthermore, blocks 422, 424 and 426 are executed by a second controller, such as the second controller 104 described in relation to Figures 1, 2 and 3.

Block 402 comprises receiving, by a first controller, a first input from a user. A user, or operator, may provide an input by interacting with physical controls such as a steering wheel, joystick, buttons, levers or the like or it may comprise a virtual interface, for example displayed on a screen, such as a touch screen. The first input may comprise an electrical signal (e.g. an analog or digital electrical signal), a wireless signal (e.g. Wi-Fi, Bluetooth) or an optical signal (e.g. communicated over optical fiber) generated by the interactions of the user with the controller (i.e. the physical controls or virtual interface).

Block 404 comprises outputting, from the first controller, a control instruction to control the component based on the first input. The control instruction may be generated and output as described in relation to Figure 1.

Block 422 comprises receiving, by a second controller, a second input based on a measured parameter. The second input may comprise data representing a value of the measured parameter or may comprise data based on the measured parameter (e.g. whether the measured parameter is within a particular range or above or below a threshold value).

The measured parameter may be a parameter relating to a state of the vehicle, relating to a state of a component of the vehicle or relating to the environment the vehicle is in, and may be measured by a sensor as described in relation to Figures 1 and 3.

Block 424 comprises determining, by the second controller, whether to permit operation of the component based on the second input. The determination may be based on a determination of whether it is safe to operate the component, for example whether it is safe to operate the component based on the control instruction. It may be determined it is not safe to operate a component, if when operating the component the vehicle, the component, the environment surrounding the vehicle or an operator or other person may be damaged, injured or otherwise put at risk by the operation of the component.

The second controller may receive multiple inputs, for example based on multiple measured parameters and/or from multiple sensors and the second output may be based on more than one of the multiple inputs. Determining whether to permit operation of the component may be determined as described in relation to Figures 1 to 3.

Block 426 comprises, when the second controller determines operation of the component is permitted, allowing the control instruction to control the component. The second controller may output a signal indicating the result of the determination which may enable or disable the component from carrying out the instructions indicated by the control instruction. In some examples, permitting the component to operate according to the control instruction may be performed by a device, such as the switching device described in relation to Figure 3. Such a device may receive the signal output by the second controller and may block or allow the first input to the first controller, it may block or allow the control instruction output from the first controller or it may enable or disable the component directly (e.g. by instructing it to be in an active or inactive state or controlling a power supply to the component). In other examples, the component may receive the signal output by the second controller and may determine whether to operate or not to operate according to the control instruction based on the received signal.

The positions of the blocks in Figure 4 are not intended to indicate relative timing of execution of the blocks. For example block 402 is shown adjacent to block 422, however this does not indicate that these blocks are to be executed simultaneously. For example receiving the first input at the first controller may be performed prior to, concurrently with, or after receiving the second input at the second controller. Similarly, the other blocks, such as outputting the control instruction in block 404 and determining whether to permit operation of the component in block 424 may be performed in various orders.

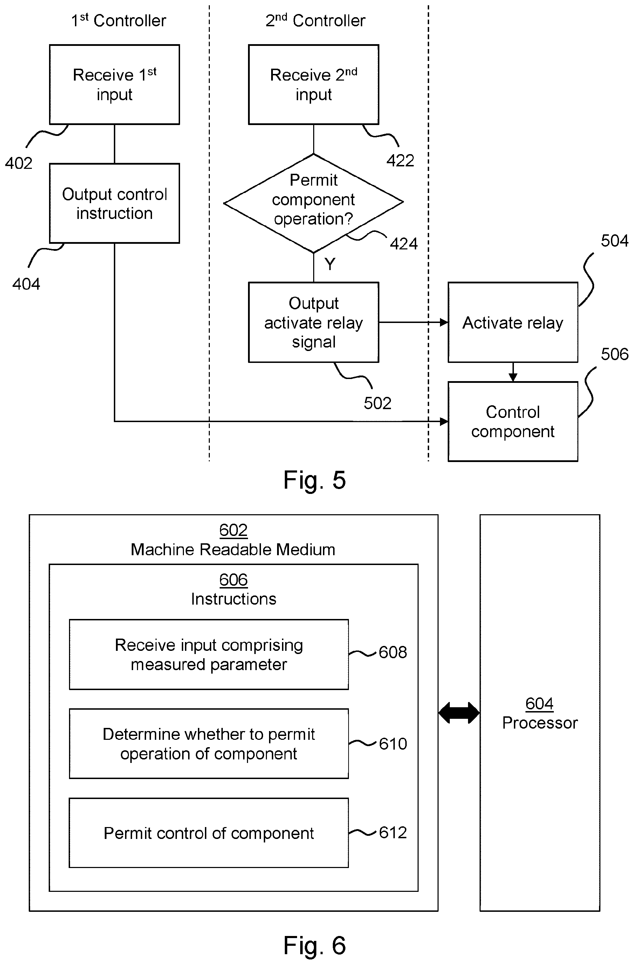

**Figure 5** is a flow chart of a method of controlling a component of a vehicle and may be an example of the method described in relation to Figure 4. In this example blocks 402 and 404 are executed by a first controller, such as the first controller 102 described in relation to Figures 1, 2 and 3. Furthermore, blocks 422, 424 and 502 are executed by a second controller, such as the second controller 104 described in relation to Figures 1, 2 and 3. Blocks 504 and 506 may be executed by another entity or entities, for example by a relay or a component of the vehicle.

The method comprises blocks 402, 402, 422 and 424 of Figure 4. In this example allowing the control instruction to control the component comprises, in block 502, outputting, by the second controller, a signal to activate a relay to enable the component, however in other examples another type of switching device such as a semiconductor device (e.g. MOSFET, IGBT) may be used in place of the relay.

In this example, the method further comprises in block 504 activating the relay, in response to the signal to activate the relay. When the relay is activated, the control component may be controlled, in block 506, according to the control instruction output by the first controller. The relay may control a power supply of the component to enable or disable the component or may otherwise control the device such that the device carries out or does not carry out the control instruction output by the first controller.

**Figure 6** shows an example of a tangible machine readable medium 602 in association with a processor 604. The machine readable medium 602 stores instructions 606 which, when executed by the processor 604 cause the processor to carry out actions.

The processor 604 may correspond to the second controller described in relation to Figures 1 to 5. The processor 604 may execute the instructions while another processor (corresponding to the first processor of Figures 1 to 5) may execute instructions corresponding to blocks 402, 404 of Figures 4 and 5.

In this example, the instructions 606 comprise instructions 608 to cause the processor 604 to receive an input comprising a measured parameter. The input may be received via a bus, such as a CAN bus, and the measured parameter may be measured by a sensor as described in relation to Figures 1 to 5. In some examples the measured parameter may be a signal from another processor, such as the first controller described in relation to Figures 1 to 5, wherein the signal is based on an input from a user.

In this example, the instructions 606 comprise instructions 610 to cause the processor 604 to determine whether to permit operation of a component of a vehicle based on the received input and instructions 612 to cause the processor 604 to, when determined to permit operation of the component, permit instructions issued by a first controller to control the component. Permitting operation of a component may be performed as described in Figures 1 to 5.

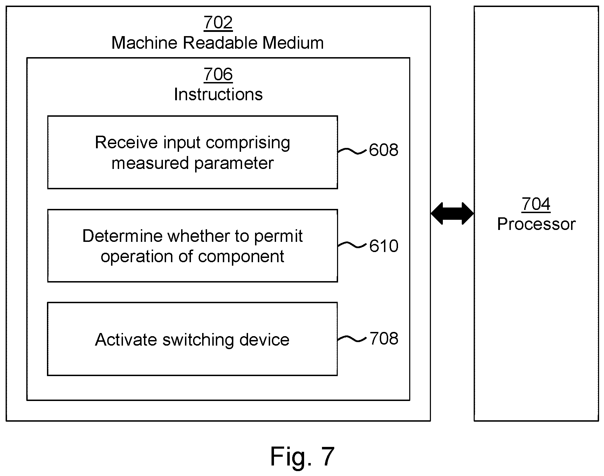

**Figure 7** shows a machine readable medium 702 associated with the processor 704. The processor 704 may correspond to the second controller described in relation to Figures 1 to 5. The processor 704 may execute the instructions while another processor (corresponding to the first processor of Figures 1 to 5) may execute instructions corresponding to blocks 402, 404 of Figures 4 and 5.

The machine readable medium 702 comprises instructions which, when executed by the processor 704, cause the processor 704 to carry out instructions 706. The instructions 706 comprise instructions 608 and 610 as described in relation to Figure 6.

The instructions 706 further comprise instructions 708 to cause the processor 704 to, when determined to permit operation of the component, activate a switching device to enable the first controller to control the component. As described in relation to Figure 3, the switching device may be a physical switching device, such a relay, or it may be a semiconductor switching device, such as a transistor (e.g. a MOSFET or IGBT). The switching device, when the switching device is not activated to enable the first controller to control the component may prevent the first input from being input to the first controller, it may prevent the control instructions output from the first controller from reaching the component or it may directly control the component (e.g. activating/deactivating the power supply of the component, setting the component to be in an active/inactive state, etc.).

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart.

It will be understood that the examples and embodiments described above are given by way of example only and those skilled in the art will understand that modifications, variations, additions or alterations may be made to specific embodiments described, or alternative embodiments may be implemented, without departing from the scope of the appended claims. Except where mutually exclusive, any of the features may be employed separately or in combination with any other features and the disclosure extends to and includes all combinations and sub-combinations of one or more features described herein.

It should be noted that as used herein, unless expressly stated otherwise, the word "comprising" does not exclude the presence of other elements or steps other than those listed, references to an element or feature in the singular does not exclude the possibility of a plurality of such elements or features, and that recitation of different features or elements in the appended claims does not necessarily imply separate components; a single component or unit may fulfil the function of several elements recited in a claim. Any reference signs in the appended claims shall not be construed so as to limit their scope.

The features of any dependent claim may be combined with the features of any of the independent claims or other dependent claims.

## Claims

1. A component control system for a vehicle comprising:
a first controller configured to:
receive a first input; and
output a control instruction to control a component of the vehicle based on the first input; and
a second controller configured to:
receive a second input;
determine, based on the second input, whether to permit operation the component; and
when the second controller determines operation of the component is permitted, enable the control instruction from the first controller to control the component.

2. A component control system as claimed in claim 1 wherein:
the first input comprises at least one of: a user input and a signal from a control unit of the vehicle; and/or
the second input comprises at least one of a measured parameter and a signal from the first controller.

3. A component control system as claimed in any preceding claim wherein the component is a hydraulic component, a pneumatic component or an electromagnetic component.

4. A component control system as claimed in any preceding claim wherein the first controller and second controller communicate via a bus.

5. A component control system as claimed in any preceding claim, wherein:
the first controller is a controller of a human machine interface of the vehicle or a controller of a display system of the vehicle; and/or
the second controller is gateway device.

6. A component control system as claimed in any preceding claim further comprising a switching device, wherein enabling the control instruction from the first controller to control the component comprises controlling the switching device, by the second controller, to enable the component to receive the control instruction from the first controller.

7. A component control system as claimed in claim 6 wherein the switching device is a relay or a semiconductor switching device.

8. A component control system as claimed in any preceding claim, wherein the vehicle is a tipper.

9. A vehicle comprising the component control system as claimed in any preceding claim.

10. A vehicle as claimed in claim 9 wherein the vehicle comprises a first part and a second part, wherein the first and second parts are physically detachable, and wherein the first controller is located within the first part and/or the second controller is located within the second part.

11. A method of controlling a component of a vehicle comprising:
receiving, by a first controller, a first input from a user;
receiving, by a second controller, a second input based on a measured parameter;
outputting, from the first controller, a control instruction to control the component based on the first input;
determining, by the second controller, whether to permit operation of the component based on the second input; and
when the second controller determines operation of the component is permitted, allowing the control instruction to control the component.

12. A method as claimed in claim 11 wherein allowing the control instruction to control the component comprises outputting, by the second controller, a signal to activate a relay to enable the component.

13. A method as claimed in claims 11 or 12 wherein the vehicle is a tipper.

14. A machine-readable medium comprising machine-readable instructions which, when executed by a processor, cause the processor to:
receive an input comprising a measured parameter;
determine whether to permit operation of a component of a vehicle based on the received input; and
when determined to permit operation of the component, permit instructions issued by a first controller to control the component.

15. A machine-readable medium comprising machine-readable instructions as claimed in claim 14 wherein the instructions to permit instructions issued by the first controller to control the component comprise instructions to activate a switching device to enable the first controller to control the component.
